# FASCICULE DE BREVET EUROPEEN

(11) **EP 1 924 498 B1**
(45) Date de publication et mention de la délivrance du brevet: **11.05.2011**
(21) Numéro de dépôt: 06794335.7
(22) Date de dépôt: 17.08.2006
(51) Int. Cl.: B64D 33/04, F02K 1/76

(54) **DISPOSITIF D'ACCROCHAGE A AUTOVERROUILLAGE DYNAMIQUE**
DYNAMISCH SELBSTVERRIEGELNDE ARRETIERVORRICHTUNG
DYNAMICALLY SELF-LOCKING CATCHING DEVICE

(30) Priorité: 15.09.2005 FR 0509412
(43) Date de publication de la demande: 28.05.2008
(73) Titulaire: Aircelle, 76700 Gonfreville L'Orcher (FR)
(72) Inventeur: GRIGIS, François, F-76190 Yvetot (FR)
(74) Mandataire: Gaillarde, Frédéric F. Ch.
(86) Numéro de dépôt international: PCT/FR2006/001954
(87) Numéro de publication internationale: WO 2007/031616

(56) Documents cités:
- US-A- 6 045 091

## Description

La présente invention se rapporte à un dispositif d'accrochage entre une première structure et une deuxième structure d'une nacelle d'avion, aptes à se déplacer l'une par rapport à l'autre, ainsi qu'à une structure équipée d'un tel dispositif.

Une nacelle d'avion est destinée à entourer un turboréacteur et est généralement équipée d'un inverseur de poussée destiné à améliorer la puissance de freinage de l'avion en réorientant vers l'avant une partie des flux de gaz émis par le turboréacteur.

Un inverseur de poussée comporte de manière générale deux demi structures entourant une partie arrière du turboréacteur et pouvant être ouvertes de manière à permettre l'accès à l'intérieur de la nacelle et à la partie du turboréacteur entourée par l'inverseur de poussée. Bien évidemment, l'ouverture de ces demi-structures ne doit pouvoir être réalisé que dans des circonstances bien déterminées, et notamment lors d'opérations de maintenance.

L'ouverture de chaque demi-structure est permise grâce à la présence de charnières montées en partie supérieure de la nacelle, en position dite à douze heures, et maintenues fermées grâce à une pluralité de verrous montés en partie inférieure, en position dite à six heures. Pour des raisons de sécurité, ces verrous sont complétés par un système de verrouillage supplémentaire destiné à prévenir certains cas de fort chargement de la nacelle tel qu'une brutale surpression interne lors du fonctionnement du turboréacteur. Ce système de verrouillage supplémentaire est fixé en partie supérieure de la nacelle afin d'éviter un déplacement trop important des demi structures l'une par rapport à l'autre.

Bien évidemment, de telles considérations s'appliquent également à des nacelles non équipées d'un inverseurs et comprenant des capots permettant d'accéder à l'intérieur de la nacelle de la même manière.

Il convient donc de prévoir des systèmes d'actionnement de ces verrous facilement accessibles tels que des systèmes de poignées et de câbles accessibles à six heures et reliés aux système de verrouillage supplémentaire à douze heures.

Un tel système de fixation nécessite donc d'actionner l'ensemble des verrous assurant le verrouillage des deux demi structures sur la nacelle à chaque opération de maintenance, ce qui est compliqué, et nécessite un réglage fin entre les verrous situés à six heures et les verrous situés à douze heures. A titre d'exemple de dispositif d'accrochage existant, on pourra citer le document US 6 045 091.

La présente invention a pour but de pallier les inconvénients précédemment évoqués et consiste pour cela en un dispositif d'accrochage entre une première structure et une deuxième structure, aptes à se déplacer l'une par rapport à l'autre, comprenant au moins un pêne rattaché à la première structure et apte, le cas échéant, à venir s'engager avec au moins un moyen de retenue correspondant de la deuxième structure, caractérisé en ce que chaque pêne est monté à l'encontre d'au moins un moyen de renvoi élastique tendant à le ramener vers une position de retrait, un moyen de butée correspondant de la deuxième structure étant apte à le maintenir dans un état de tension lorsque celle-ci est à proximité de la première structure, de manière à ce que, d'une part, lors d'un écartement rapide entre la première structure et la deuxième structure, provoqué notamment par un incident en vol, chaque pêne et moyen de retenue correspondant s'engagent afin de limiter l'écartement entre la première structure et la deuxième structure, et d'autre part, lors d'un écartement lent, notamment lors d'une ouverture pour maintenance au sol, chaque pêne et moyen de retenue correspondant demeurent dissociés, permettant alors l'ouverture complète entre la première structure et la deuxième structure.

Il doit être bien compris que le terme « état de tension » désigne un état dans lequel l'organe de renvoi élastique exerce une force de rappel sur le pêne, un tel état pouvant correspondre indifféremment à un état de compression ou à un état d'étirement d'un organe élastique.

Ainsi, en équipant le pêne d'un moyen de renvoi élastique tendant à le ramener dans une position de retrait et maintenu dans un état de tension lorsque les deux structures sont proches l'une de l'autre, l'écartement de la première structure par rapport à la deuxième structure se traduit par l'éloignement progressif du moyen de butée associé au moyen de renvoi élastique qui, de ce fait, revient de son état de tension vers un état de détente au fur et à mesure de cet écartement. De cette manière, le mouvement du pêne sous l'action du moyen de renvoi élastique depuis une position d'armement vers sa position de retrait, dépend également de l'écartement de la première structure par rapport à la deuxième.

Dans le cas où l'écartement est lent, notamment dans le cas d'une ouverture lors d'une opération de maintenance au sol, le moyen de butée demeure au contact du moyen de renvoi élastique et limite son retour vers sa position de détente. De ce fait, le mouvement du pêne vers sa position de retrait suit strictement l'écartement des deux structures et possède la même vitesse.

Dans le cas où l'écartement est suffisamment rapide, le moyen de renvoi élastique n'est plus maintenu dans un état de tension par le moyen de butée au cours de l'écartement, ce qui entraîne une détente rapide du moyen de renvoi élastique. Toutefois, ce mouvement de détente du moyen de renvoi élastique reste moins rapide que l'écartement entre la première structure et la deuxième structure. En effet, le moyen de butée n'étant plus en contact avec le moyen de renvoi élastique, la vitesse d'écartement des structures est supérieure à la vitesse de détente du moyen de renvoi élastique et donc à la vitesse de retour du pêne dans sa position de retrait.

Par conséquent, Il suffit de prévoir un écart suffisant entre le pêne et le moyen de retenue correspondant pour ne permettre le déplacement de la deuxième structure par rapport à la première que lorsque ce déplacement s'effectue lentement. En effet, lors d'un écartement rapide de la deuxième structure par rapport à la première structure, le moyen de retenue, rattaché à la deuxième structure, se déplace de manière suffisamment rapide pour venir engager le pêne en position d'armement avant que celui-ci n'ait eu le temps de s'éloigner suffisamment de sa position dans lequel le moyen de retenue est apte à venir l'engager, et dans laquelle il était maintenu par le moyen de renvoi élastique sous l'action du moyen de butée. Réciproquement, lorsque la première structure s'écarte lentement de la deuxième, le pêne a le temps de revenir dans sa position de retrait et de s'éloigner de sa position initiale dans laquelle il était maintenu par le moyen de renvoi élastique et dans laquelle il pouvait être engagé avec le moyen de retenue. Dans ce cas, l'écartement des deux structures est donc permis, tandis que lorsque la deuxième structure s'écarte rapidement de la première, le pêne se trouve engagé avec le moyen de retenue avant de pouvoir s'écarter suffisamment de sa position d'armement vers sa position de retrait, et l'écartement des deux structures est donc empêché.

Par ailleurs, il convient de noter que lors du mouvement de fermeture une fois l'opération de maintenance terminée, le dispositif d'accrochage selon l'invention est réarmé automatiquement. En effet, lors de la fermeture, c'est-à-dire lorsque la première structure et la deuxième structure sont rapprochées l'une de l'autre, le moyen de butée de la deuxième structure vient ramener le moyen de renvoi élastique correspondant dans un état de tension et l'y maintien. De ce fait, le pêne est également forcé à revenir dans sa position d'armement et y est maintenu jusqu'à la prochaine ouverture des deux structures.

Il sera avantageusement tenu compte des éventuels jeux inter-pièces ainsi que du calage des structures en prévoyant un écart entre le pêne et le moyen de retenue correspondant légèrement supérieur à la trajectoire théorique du pêne afin de s'assurer que de tels aléas ne perturbent pas le bon fonctionnement du mécanisme.

Avantageusement, le pêne est monté mobile en rotation autour d'un axe.

Selon une première variante de réalisation de l'invention, le moyen de renvoi élastique est disposé à l'encontre d'un levier rattaché au pêne et apte à venir au contact du moyen de butée par l'intermédiaire d'une surface conçue de manière à présenter une instabilité de pivotement sous l'action du moyen de renvoi élastique. Avantageusement, la surface de contact entre le levier et le moyen de butée présente une arête. Avantageusement encore, l'arête est arrondie.

De manière avantageuse, le moyen de renvoi élastique est un ressort axial. Alternativement, le moyen de renvoi élastique est un ressort à lames.

Selon une deuxième variante de réalisation de l'invention le moyen de renvoi élastique est monté sur l'axe de rotation du pêne. Avantageusement, le moyen de renvoi élastique est monté sur un axe de rotation du pêne, le ressort est avantageusement un ressort spiral.

Préférentiellement, le moyen de retenue se présente sous la forme d'un crochet.

De manière préférentielle, le moyen de butée est apte à agir sur un moyen de renvoi élastique du pêne et à le maintenir dans un état de compression.

La présente invention se rapporte également à une structure d'une nacelle d'avion apte à s'écarter ou se rapprocher d'une autre structure, caractérisée en ce qu'elle comprend au moins un pêne disposé à l'encontre d'au moins un moyen de renvoi élastique tendant à le ramener dans sa position de retrait.

De manière préférentielle, une telle structure précédemment décrite est caractérisée en ce qu'il s'agit d'une demi structure d'un inverseur de poussée équipant une nacelle de turboréacteur.

Bien évidement, le ou les pêne(s) peuvent indifféremment équiper la structure mobile ou fixe, l'autre structure, respectivement fixe ou mobile par rapport à la première structure, étant alors équipée des moyens de retenue ainsi que du ou des moyens de butée correspondants. Il convient de noter que les deux structures peuvent être mobiles par rapport à une troisième structure fixe.

La mise en oeuvre de l'invention sera mieux comprise à l'aide de la description détaillée qui est exposée ci-dessous en regard du dessin annexé dans lequel :
La figure 1 est une représentation schématique d'un dispositif d'accrochage selon l'invention entre une première structure et une deuxième structure d'une nacelle d'avion avant armement dudit dispositif.
La figure 2 est une représentation du dispositif de la figure 1 après armement de ce dernier.
La figure 3 est une représentation du dispositif de la figure 1 dans une position de blocage suite à un écartement rapide des deux structures.
La figure 4 est une représentation du dispositif de la figure 1 dans une position de retrait suite à un écartement lent des deux structures.

Avant de décrire plus avant un mode de réalisation de l'invention, il est important de préciser que celle-ci n'est pas limitée à une structure de nacelle particulière équipée qui peut être ou non équipée d'un inverseur de poussée. De manière générale, la présente invention concerne toute structure comprenant des parties susceptibles de se déplacer les unes par rapport aux autres et dont il convient d'assurer un accrochage automatique limitant le déplacement relatif d'une partie par rapport à l'autre tout en permettant une séparation aisée desdites parties lors d'opérations de maintenance. Un tel dispositif est notamment utilisé sur des inverseurs de poussée comportant deux demi structures entourant une partie du turboréacteur et montées mobiles radialement afin de pouvoir procéder à des opérations de maintenance sur la partie du turboréacteur entourée par l'inverseur. Bien évidemment, ce dispositif peut être utilisé sur une nacelle ne comprenant pas d'inverseur de poussée mais équipée de capots mobiles permettant d'accéder à l'intérieur de ladite nacelle. Dans un tel cas, ces dispositifs de verrouillage sont installés à douze heures, c'est-à-dire en position haute de la nacelle, et sont particulièrement difficiles d'accès.

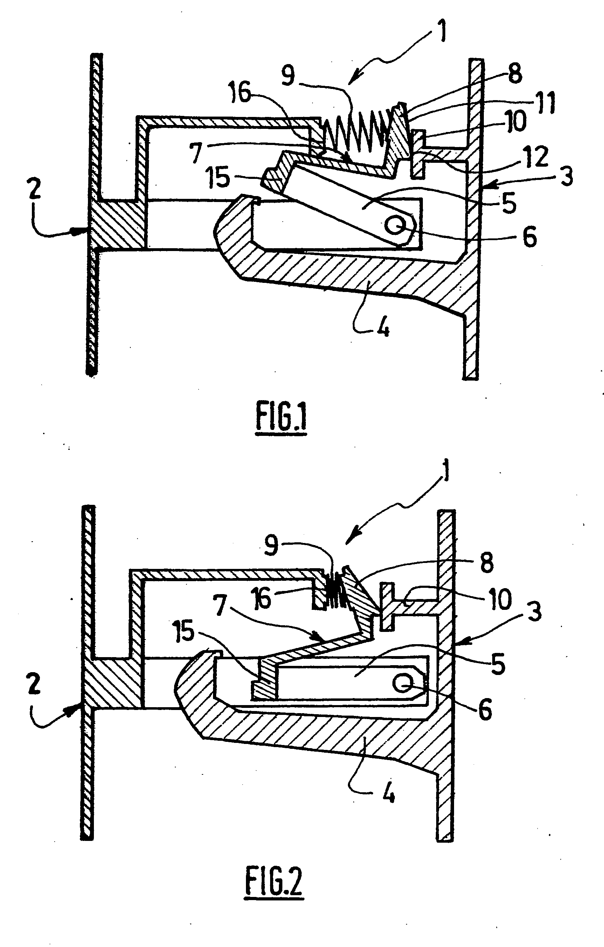

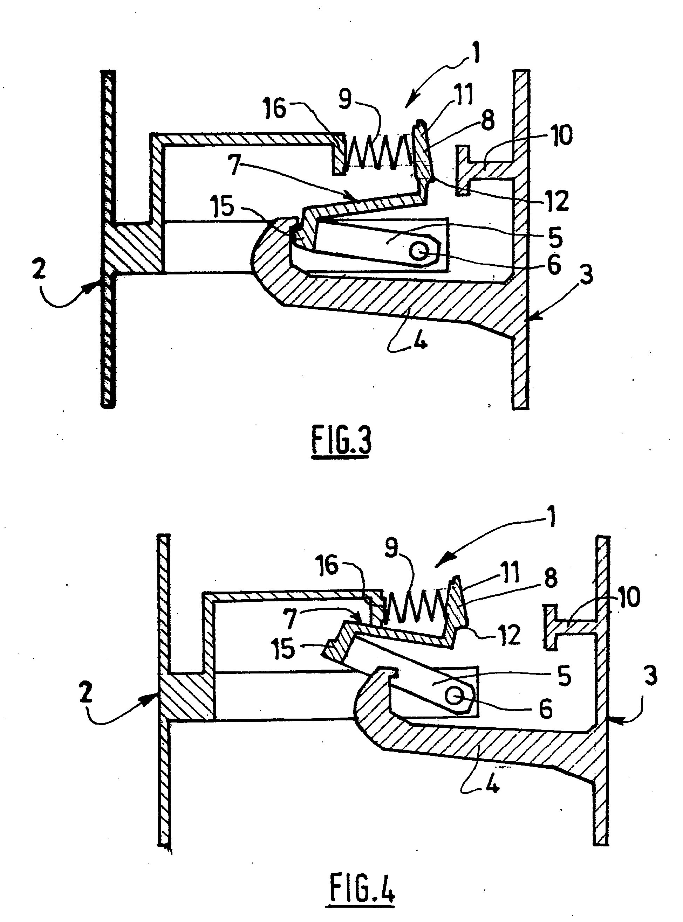

Un dispositif d'accrochage 1 selon l'invention, tel que représenté sur les figures 1 à 4, est destiné à empêcher l'écartement d'une première structure 2 relativement à une deuxième structure 3. Il pourra s'agir, par exemple, d'empêcher l'ouverture radiale d'un demi-ensemble d'un inverseur de poussée par rapport à une nacelle à laquelle il est intégré.

Pour ce faire, le dispositif d'accrochage 1 comprend un crochet 4 équipant la deuxième structure 3 et formant un moyen de retenue apte à coopérer le cas échéant avec un pêne 5 rattaché à la première structure 2. Le pêne 5 est monté mobile en rotation autour d'un axe 6 de manière à pouvoir passer alternativement d'une position d'armement dans laquelle le pêne 5 est apte à être engagé avec le crochet 4, à une position de retrait dans laquelle le pêne 5 est éloigné du crochet 4 et ne peut être engagé par ce dernier.

Par ailleurs, le dispositif d'accrochage 1 comprend un levier 7 rattaché à une extrémité 15 du pêne 5. Ce levier 7 est terminé par un talon 8 en appui sur un ressort 9 monté sur une surface 16 de la première structure 2, et situé en regard d'une butée 10 équipant la deuxième structure 3.

Le talon 8 est apte à venir au contact de la butée 10 par l'intermédiaire d'une surface 11 présentant une arête arrondie 12 décalé par rapport à l'axe du ressort 9 et apte à remplir un rôle de pivot sous l'action du ressort 9. Ainsi, lorsque le ressort 9 est comprimé, ce dernier exerce une force de rappel tendant à faire pivoter le levier 7 dans un sens d'ouverture du pêne 5 vers sa position de retrait.

Un utilisateur souhaitant activer l'accrochage entre la première structure 2 et la deuxième structure 3 procèdera de la façon suivante.

Initialement, la deuxième structure 3 est éloignée de la première structure 2 ou, comme représenté sur la figure 1 ne fait que l'effleurer, c'est-à-dire que la butée 10 est simplement au contact de l'arête 12 sans exercer de pression sur la talon 8, et donc sans comprimer le ressort 9. Le dispositif d'accrochage 1 est donc en position de retrait, le pêne 5 étant maintenu écarté du crochet 4 par l'action du ressort 9 sur le levier 7.

Afin de lier la première structure 2 et la deuxième structure 3 entre elles, il convient d'armer le dispositif d'accrochage 1 comme représenté sur la figure 2. Pour ce faire, la deuxième structure 3 est rapprochée de la première structure 2. La butée 10 vient alors exercer une pression sur le talon 8 et par voie de conséquence comprime le ressort 9. Simultanément, le recul du talon 8 entraîne pivotement du pêne 5 vers une position de fermeture dans laquelle il fait face au crochet 4.

Il convient maintenant de distinguer selon que la deuxième structure 3 s'écarte rapidement ou lentement de la première structure 2.

Dans le cas d'un écartement rapide de la deuxième structure 3 relativement à la première structure 2, écartement pouvant être provoqué notamment par un incident en vol tel que l'éclatement d'un conduite d'air du turboréacteur, la vitesse d'écartement est supérieure à la vitesse de détente du ressort 9 et la butée 10 se décolle rapidement du talon 8 tandis que le crochet 4 se rapproche rapidement du pêne 5. La butée 10 n'étant plus en contact avec l'arête 12, cette dernière ne remplit plus de fonction de point de pivot facilitant la rotation du levier 7 et du pêne 5. Par conséquent le pêne 5 est, sous l'effet de la décompression du ressort 9, animé d'un mouvement de rotation plus lent et la trajectoire de l'extrémité 15 par rapport au crochet 4 est relativement aplanie selon la vitesse d'écartement de la deuxième structure 3 par rapport à la première structure 2. Ainsi, le crochet 4 engage le pêne 5 avant que ce dernier ait eu le temps de pivoter suffisamment pour s'écarter du crochet 4. De ce fait, l'écartement de la deuxième structure 3 par rapport à la première structure 2 est stoppé.

Dans le cas d'un écartement lent de la deuxième structure 3 relativement à la première structure 2, notamment lors d'une ouverture pour procéder à une opération de maintenance au sol, la butée 10 se déplace suffisamment lentement pour être suivi par le talon 8, repoussé contre ladite butée 10 par le ressort 9. La butée 10 reste donc en contact avec l'arête 12 qui, sous l'effet de la force exercée par le ressort 9 contre le talon 8 sert de point de pivot qui aide à la rotation du levier 7 et donc du pêne 5. Par conséquent, la trajectoire de l'extrémité 15 du pêne 5 suit une trajectoire quasi circulaire tandis que le crochet 4 se rapproche du pêne 5. Ainsi, lorsque le crochet 4 arrive suffisamment près du pêne 5 pour être en mesure de l'engager, ce dernier a déjà pivoté suffisamment pour se trouver écarté du crochet 4, dans une position de retrait. Le crochet 4 n'étant pas engagé avec le pêne 5, le déplacement de la deuxième structure 3 par rapport à la première structure 2 n'est pas stoppé et peut être poursuivi jusqu'à l'ouverture souhaitée.

Ainsi, dans le cadre d'une application à une nacelle abritant un turboréacteur et comprenant des trappes et/ou un inverseur comportant deux demi parties mobiles radialement, ces éléments pourront être liés ensemble à la nacelle à l'aide de dispositifs d'accrochage 1 selon l'invention. De cette manière, une ouverture lente ou manuelle de ces éléments lors d'opérations de maintenance au sol pourra être effectué sans qu'un opérateur n'ait besoin de déverrouiller l'ensemble des dispositifs de verrouillage fermant ces éléments mobiles en vol. A l'inverse, dans le cas d'un incident en vol, tel qu'une rupture de conduite d'air du turboréacteur, qui tendrait à provoquer un écartement rapide de ces éléments mobiles, les dispositifs d'accrochage 1 selon l'invention assurerait la retenue de ces éléments mobiles.

## Revendications

1. Dispositif d'accrochage (1) entre une première structure (2) et une deuxième structure (3), aptes à se déplacer l'une par rapport à l'autre, comprenant au moins un pêne (5) pouvant être rattaché à la première structure et au moins un moyen de retenue (4) correspondant pouvant être rattaché à la deuxième structure, ledit pêne étant apte , le cas échéant, à venir s'engager avec ledit moyen de retenue (4), **caractérisé en ce que** chaque pêne est monté à l'encontre d'au moins un moyen de renvoi élastique (9) tendant à le ramener vers une position de retrait, un moyen de butée (10) correspondant de la deuxième structure étant apte à le maintenir dans un état de tension lorsque celle-ci est à proximité de la première structure, l'état de tension étant tel que, d'une part, lors d'un écartement rapide entre la première structure et la deuxième structure entraînant un relâchement rapide du moyen de butée, chaque pêne, retournant vers sa position de retrait sous l'action du moyen de renvoi élastique, et moyen de retenue correspondant s'engagent, limitant ainsi l'écartement relatif entre la première structure et la deuxième structure, et d'autre part, lors d'un écartement lent entraînant un relâchement progressif et relativement lent du moyen de butée chaque pêne, retournant pareillement vers sa position de retrait et moyen de retenue correspondant demeurent dissociés, permettant alors l'ouverture complète entre la première structure et la deuxième structure.

2. Dispositif d'accrochage (1) selon la revendication 1, **caractérisé en ce que** le pêne (5) est monté mobile en rotation autour d'un axe (6).

3. Dispositif d'accrochage (1) selon la revendication 2, **caractérisé en ce que** le moyen de renvoi élastique (9) est disposé à l'encontre d'un levier (7) rattaché au pêne (5) et apte à venir au contact du moyen de butée (10) par l'intermédiaire d'une surface (11) conçue de manière à présenter une instabilité de pivotement sous l'action du moyen de renvoi élastique.

4. Dispositif d'accrochage (1) selon la revendication 3, **caractérisé en ce que** la surface (11) de contact entre le levier (7) et le moyen de butée (10) présente une arête (12).

5. Dispositif d'accrochage (1) selon la revendication 4, **caractérisé en ce que** l'arête (12) est arrondie.

6. Dispositif d'accrochage (1) selon l'une quelconque des revendications 1 à 5, **caractérisé en ce que** le moyen de renvoi élastique est un ressort (9) axial.

7. Dispositif d'accrochage (1) selon l'une quelconque des revendications 1 à 5, **caractérisé en ce que** le moyen de renvoi élastique est un ressort à lames.

8. Dispositif d'accrochage selon la revendication 2, **caractérisé en ce que** le moyen de renvoi élastique est monté sur l'axe de rotation du pêne.

9. Dispositif d'accrochage selon la revendication 8, **caractérisé en ce que** le moyen de renvoi élastique est un ressort spiral.

10. Dispositif d'accrochage (1) selon l'une quelconque des revendications 1 à 9, **caractérisé en ce que** le moyen de retenue se présente sous la forme d'un crochet (4).

11. Dispositif d'accrochage (1) selon l'une quelconque des revendications 1 à 10, **caractérisé en ce que** le moyen de butée (10) est apte à agir sur un moyen de renvoi élastique (9) du pêne (5) et à le maintenir dans un état de compression.

12. Ensemble d'une première structure (2), d'une seconde structure complémentaire (3), la première structure étant apte à s'écarter ou se rapprocher de la seconde structure complémentaire, **caractérisé en ce qu'**il comprend un dispositif d'accrochage selon l'une quelconque des revendications 1 à 11, la première structure comprenant le pêne (5) disposé à l'encontre du moyen de renvoi élastique (9) tendant à le ramener dans sa position de retrait , la seconde structure complémentaire étant équipée du moyen de retenue correspondant.

13. Ensemble selon la revendication 12, **caractérisée en ce qu'**au moins l'une des première et seconde structure étant une demi structure d'un inverseur de poussée équipant une nacelle de turboréacteur.

## Claims

1. A catching device (1) between a first structure (2) and a second structure (3), adapted to relative to each other, comprising at least one bolt (5) linked to the first structure and at least one corresponding retaining means (4) linked to the second structure, said bolt being able, if applicable, to engage with said retaining means (4), **characterized in that** each bolt is mounted in opposition to at least one elastic return means (9) tending to bring it back to a retracted position, a stop means (10) corresponding to the second structure being adapted to maintain it in a taut state when the latter is proximate the first structure, the tautness being such that, on one hand, when the first structure is rapidly spaced apart from the second structure causing a rapid release of the stop means, each bolt, returning towards its retracted position under the action of the elastic return means, is engaged with at least one corresponding retaining means so as to limit the relative spacing between the first structure and the second structure and, on the other hand, when the first structure is slowly spaced apart from the second structure causing a gradual and relatively slow release of the stop means, each bolt, returning in the same way towards its retracted position, and corresponding retaining means remain separated, thereby allowing complete opening between the first structure and the second structure.

2. The catching device (1) according to claim 1, **characterized in that** the bolt (5) is rotatably mounted around an axis (6).

3. The catching device (1) according to claim 2, **characterized in that** the elastic return means (9) is arranged in opposition to a lever (7) attached to the bolt (5) and adapted to come into contact with the stop means (10) via a surface (11) designed so as to be pivotably unstable under the action of the elastic return means.

4. The catching device (1) according to claim 3, **characterized in that** the contact surface (11) between the lever (7) and the stop means (10) has an edge (12).

5. The catching device (1) according to claim 4, **characterized in that** the edge (12) is rounded.

6. The catching device (1) according to any one of claims 1 to 5, **characterized in that** the elastic return means is an axial spring (9).

7. The catching device (1) according to any one of claims 1 to 5, **characterized in that** the elastic return means is a leaf spring.

8. The catching device according to claim 2, **characterized in that** the elastic return means is mounted on the axis of rotation of the bolt.

9. The catching device according to claim 8, **characterized in that** the elastic return means is a spiral spring.

10. The catching device (1) according to any one of claims 1 to 9, **characterized in that** the retaining means assumes the forum of a hook (4).

11. The catching device (1) according to any one of claims 1 to 10, **characterized in that** the stop means (10) is adapted to act on an elastic return means (9) of the bolt (5) and to keep it stressed.

12. An assembly of a first structure (2), a second complementary structure (3), the first structure being adapted to move away from or closer to the second complementary structure, **characterized in that** it comprises a catching device according to any one of claims 1 to 11, the first structure comprising the bolt (5) arranged in opposition to the elastic return means (9) tending to bring it back to its retracted position, the second complementary structure being equipped with the corresponding retaining means.

13. The assembly according to claim 12, **characterized in that** at least one of the first and second structures is a half-structure of a thrust reverser equipping a turbojet engine nacelle.

## Patentansprüche

1. Arretiervorrichtung (1) zwischen einer ersten Struktur (2) und einer zweiten Struktur (3), die imstande sind, sich im Verhältnis zueinander zu bewegen, die mindestens einen Riegel (5) umfasst, der mit der ersten Struktur verbindbar ist und mindestens ein entsprechendes Rückhaltemittel (4), das mit der zweiten Struktur verbindbar ist, wobei der Riegel gegebenenfalls imstande ist, in das Rückhaltemittel (4) einzugreifen, **dadurch gekennzeichnet, dass** der Riegel an mindestens einem elastischen Rückholmittel (9) montiert ist, das dazu neigt, ihn in eine zurückgezogene Stellung zurückzuholen, wobei ein entsprechendes Anschlagmittel (10) der zweiten Struktur imstande ist, ihn in einem Spannungszustand zu halten, wenn sich diese in der Nähe der ersten Struktur befindet, wobei der Spannungszustand derart ist, dass einerseits bei einer schnellen Beabstandung zwischen der ersten Struktur und der zweiten Struktur, was zu einer schnellen Freigabe des Anschlagmittels führt, jeder Riegel, der in seine zurückgezogene Stellung unter Einwirkung des elastischen Rückholmittels zurückkehrt, und das entsprechend Rückhaltemittel eingreifen, wobei **dadurch** der relative Abstand zwischen der ersten Struktur und der zweiten Struktur begrenzt wird, und andererseits bei einer langsamen Beabstandung, was zu einem schrittweisen und relativ langsamen Loslassen des Anschlagmittels führt, jeder Riegel, der ebenfalls in seine zurückgezogene Stellung zurückkehrt, und das entsprechende Rückhaltemittel getrennt bleiben und damit die vollständige Öffnung zwischen der ersten Struktur und der zweiten Struktur erlauben.

2. Arretiervorrichtung (1) nach Anspruch 1, **dadurch gekennzeichnet, dass** der Riegel (5) drehbar beweglich um eine Achse (6) montiert ist.

3. Arretiervorrichtung (1) nach Anspruch 2, **dadurch gekennzeichnet, dass** das elastische Rückholmittel (9) an einem mit dem Riegel (5) verbundenen Hebel (7) angeordnet ist und imstande, das Anschlagmittel (10) über eine Fläche (11) zu kontaktieren, die derart konstruiert ist, dass sie unter Einwirkung des elastischen Rückholmittels eine Drehinstabilität ausweist.

4. Arretiervorrichtung (1) nach Anspruch 3, **dadurch gekennzeichnet, dass** die Kontaktfläche (11) zwischen dem Hebel (7) und dem Anschlagmittel (10) eine Kante (12) aufweist.

5. Arretiervorrichtung (1) nach Anspruch 4, **dadurch gekennzeichnet, dass** die Kante (12) abgerundet ist.

6. Arretiervorrichtung (1) nach einem der Ansprüche 1 bis 5, **dadurch gekennzeichnet, dass** das elastische Rückholmittel eine axiale Feder (9) ist

7. Arretiervorrichtung (1) nach einem der Ansprüche 1 bis 5, **dadurch gekennzeichnet, dass** das elastische Rückholmittel eine Blattfeder ist.

8. Arretiervorrichtung nach Anspruch 2, **dadurch gekennzeichnet, dass** das elastische Rückholmittel auf der Drehachse des Riegels montiert ist.

9. Arretiervorrichtung nach Anspruch 8, **dadurch gekennzeichnet, dass** das elastische Rückholmittel eine Spiralfeder ist.

10. Arretiervorrichtung (1) nach einem der Ansprüche 1 bis 9, **dadurch gekennzeichnet, dass** das Rückhaltemittel die Form eines Hakens (4) aufweist.

11. Arretiervorrichtung (1) nach einem der Ansprüche 1 bis 10, **dadurch gekennzeichnet, dass** das Anschlagmittel (10) imstande ist, auf ein elastisches Rückholmittel (9) des Riegels (5) einzuwirken und es in einem Kompressionszustand zu halten.

12. Gruppe einer ersten Struktur (2), einer zweiten komplementären Struktur (3), wobei die erste Struktur imstande ist, sich von der zweiten komplementären Struktur zu beabstanden oder sich ihr anzunähern, **dadurch gekennzeichnet, dass** sie eine Arretiervorrichtung nach einem der Ansprüche 1 bis 11 umfasst, wobei die erste Struktur den Riegel (5) umfasst, der an dem elastischen Rückholmittel (9) angeordnet ist, das dazu neigt, ihn in seine zurückgezogene Stellung zurückzuholen, wobei die zweite komplementäre Struktur mit dem entsprechenden Rückhaltemittel ausgestattet ist.

13. Gruppe nach Anspruch 12, **dadurch gekennzeichnet, dass** mindestens eine der ersten und zweiten Struktur eine Halbstruktur einer Schubumkehr ist, die einen Turbotriebwerksrumpf ausstattet.
